# EUROPEAN PATENT SPECIFICATION

(11) **EP 1 620 370 B1**
(45) Date of publication and mention of the grant of the patent: **08.03.2006**
(21) Application number: 04725690.4
(22) Date of filing: 05.04.2004
(51) Int. Cl.: C04B 2/00, B01D 39/20, B22F 3/11

(54) **OPEN-POROUS MOLDED BODY, METHOD FOR PRODUCTION AND USE THEREOF**
OFFENPORIGER FORMKÖRPER, VERFAHREN ZU DESSEN HERSTELLUNG UND VERWENDUNG DIESES KÖRPERS
CORPS MOULE A PORES OUVERTS, PROCEDE DE PRODUCTION ET D'UTILISATION DE CE CORPS

(30) Priority: 07.04.2003 DE 10316929
(43) Date of publication of application: 01.02.2006
(73) Proprietor: Inco Limited, Toronto Ontario M5H 4B7 (CA); Fraunhofer-Gesellschaft zur Förderung der angewandten Forschung e.V., 80686 München (DE)
(72) Inventor: NAUMANN, Dirk, Mississauga, Ontario L5M 5E8 (CA); WEISSGÄRBER, Thomas, 01328 Dresden (DE); BÖHM, Hans-Dietrich, 01324 Dresden (DE); ENGELMANN, Beate, 01099 Dresden (DE); WALTHER, Gunnar, 01309 Dresden (DE); BÖHM, Alexander, 01728 Hänichen (DE)
(74) Representative: Pfenning, Meinig & Partner GbR
(86) International application number: PCT/EP2004/003585
(87) International publication number: WO 2004/089564

(56) References cited:
- US-A- 4 053 662
- US-A- 4 251 272

## Description

The invention relates to a method for fabricating an open-porous molded body which is formed from nickel or iron, and at least another element which form solid solutions or intermetallic phases or on the surface thereof such solid solutions or intermetallic phases are formed. In particular, due to the thermal properties of such solid solutions or intermetallic phases formed with nickel the open-porous molded bodies according to the invention are also thermally stable within the high temperature range at least beyond of 700 °C, and are allowed to be employed there without any problems. Thus, the molded bodies according to the invention can be used for exhaust gas systems as particle filters. In addition, herein the good heat conductivity and electric conductivity in particular cases as well have an advantageous effect on it.

Thus, organic particles contained in such a particle filter can be converted into gaseous components by means of thermal regeneration methods, and can be removed from such a particle filter, for example. The temperature increase required to this as a rule, is not harmful for the used material. However, such a temperature increase can also be achieved by means of electric resistance heating of a particle filter designed this way.

Open-porous nickel type molded bodies belong to the prior art, and are available from INCO company as a commercial product having different porosities and a different number of pores, for example.

However, the heretofore available foam structures are limited to defined geometric shapes of formation, and in particular such geometries which are spherically curved around at least one axis are available to a limited extent only, if at all.

In addition, it is problematical if with further processing such an open-porous foam structure made of nickel or iron, the formation of solid solutions or intermetallic phases is to be achieved with other metals each suitable to this.

On that occasion, it will be usually proceeded in that each additional material is deposited in powdery form including an organic binder upon the surface of the powdery open-porous foam structure. Thereafter, the organic component of the binder is expelled by means of a corresponding thermal treatment, and in a second step at increased temperatures the formation of intermetallic phases and solid solutions is achieved in a process which is very similar to sintering.

It is obvious, that restrictions are placed with the application of the respective metallic powder including the organic binder, in particular, since it is not readily possible to uniformly provide large displacement, open-porous bodies with such a coating consisting of the binder and metallic powder, if possible.

It is more especially problematical, when such open-porous bodies are also shaped in a three-dimensional manner, and have surface areas which are not accessible or it is difficult to be accessed for a coating.

However, these problems cannot be solved with the solution described in DE 37 29 126 A1 as well.

Therein, for example, an iron chromium aluminium alloy is to be deposited in a similar way upon a metal foam body, and upon it again a catalytically acting metal oxide layer is to be formed.

In this publication, the metal foam body to be employed is not further specified, and it is merely to form the actual carrier for the layer system to be subsequently deposited.

The iron chromium aluminium alloy suggested therein has the disadvantages at least with respect to its thermal properties. Furthermore, such an alloy layer cannot be readily deposited upon the metals forming different foam bodies with sufficient durable adhesive strength.

US 4,053,662 describes a method of processing porous metal filters used for separating isotopes of uranium hexafluoride, so as to improve the mechanical strength and resistance to corrosion.

A porous sintered metal structure for use as abradable seals is disclosed in US 4,251,272. An intermetallic compound of nickel with one of chromium, titanium, cobalt and nickel is introduced into the porous structure.

Therefore, it is an object of the invention to suggest possibilities how open-porous geometric shapes can be provided which re thermally resistant as well as mechanically resistant.

This object is solved according to the invention with a method comprising the features of claim 1. The respective open-porous molded bodies are defined in claim 20, and an advantageous use results from claim 34 accordingly.

Advantageous embodiments and improvements of the invention can be achieved with the features indicated in the subordinate claims, respectively.

With the fabrication of open-porous molded bodies according to the invention, it will be proceeded such that an open-porous body made of nickel or iron as being commercially available will be coated on its surface, but also on the surface of the inside open pores with an organic binder, and in addition with a powder of a metal which is allowed to form solid solutions or intermetallic phases with the nickel or iron of the open-porous body.

Subsequent to this coating of the open-porous body shaping the thus pretreated body is performed. During this shaping defined minimum bending radii have to be observed in order to avoid breaking of the open-porous body. The minimum bending radii will be generally determined by the porosity of the body as well as the respective thickness in the range of bending radius.

An open-porous structure pretreated this way which is shaped from the coated open-porous body is still allowed to be well deformed in order to form the desired shape of a molded body according to the invention. However, after the formation of solid solutions or intermetallic phases a deformation is not possible any longer without damage due to the brittleness thereof.

After this shaping, a two-stage thermal treatment is carried out. Hence, the predetermined shape of the molded body will be maintained, and the volume will only be changed slightly, if at all, wherein then it is allowed to get an enlargement of the volume, as the case may be, which can be advantageously used, however.

On that occasion, during a first thermal treatment the organic components being substantially the binder components are expelled, and sintering with a simultaneous formation of the respective solid solutions or intermetallic phase is carried out in a second thermal treatment to be subsequently performed.

As a rule, subsequent to the second thermal treatment the molded body according to the invention is finished.

However, it is also allowed to perform further additional processing steps to achieve a desired surface modification of the open-porous molded body already fabricated previously, as the case may be.

It is advantageous for the application of the organic binder and the application of the metallic powder each further required to be separated from each other.

Thus, the application of the organic binder upon the surface of the open-porous body made of nickel or iron can be provided by dipping and / or spraying, for example.

With this, the respective organic binder itself should solely have either a sufficiently low viscosity or should be employed in a preferably aqueous solution having a correspondingly lower viscosity.

With the application of the binder upon the surface of the open-porous body made of nickel or iron it should be observed that merely the respective surface is coated, and the open-porous structure is maintained.

This can be achieved by pressing and / or exhausting the excessive binder, for example.

An open-porous body provided with a binder coating is allowed to be coated then with the respective metallic powder, wherein this powder coating process should be supported, if possible, to ensure a uniform coating of the surface of the open-porous body in the inboard volume areas thereof as well. This can be achieved, for example, by setting into vibration the open-porous body during coating with the respective metallic powder or subsequent to it. For this, preferably high-frequent vibration with low amplitude is allowed to be effective.

Particularly advantageous is the use of aluminium powder since the nickel aluminide or iron aluminide formed after the second thermal treatment reach a high thermal and mechanical stability, and are electrically conductive and corrosion resistant as well.

In any case, further powdery metals can be added to the metallic powder forming the respective solid solutions or the respective intermetallic phase to further affect the desired properties advantageously. However, additional metals are used with correspondingly reduced portions. Thus, small quantities of other powdery elements can be added to a metallic powder, e.g. aluminium powder, or prealloyed powder can be used. Thus, the corrosion resistance of the molded body according to the invention can be enhanced such as with chromium. Other properties can be affected advantageously with boron or tantalum.

Shaping the open-porous body made of nickel or iron which is pretreated with the binder and metallic powder as already mentioned can be achieved such that a hollow cylinder can be preformed from a preferably plate-like open-porous body, and subsequent to the two thermal treatment stages already mentioned a hollow cylindrical body according to the invention can be fabricated. On that occasion, shaping can be supported with the aid of a winding mandrel which is correspondingly formed.

Taking up this idea, it is then possible to fabricate a plurality of such molded bodies having equivalent inner and outer diameters in a hollow cylinder shape, to join them into one another such that almost a multi-shell structure is achievable.

One or a plurality of such prepared molded bodies which still have not been subjected to thermal treatment are allowed to be inserted into an additional cylindrical body which is then allowed at least to form the outer circumferential surface of a complete molded body according to the invention. Then, the thermal treatment can be performed within this cylinder. During the thermal treatment, the cylinder also forms the shape then, and is able to comply the function of a mold simultaneously.

The cylinder used for this can be formed as a hollow cylinder with open end faces opposing each other.

In particular, for removing the organic binder components, and as the case may be, also for the final application of the molded body according to the invention, it is advantageous to provide perforations, that means apertures formed in the circumferential surface correspondingly, at least in the outer circumferential surface of such a cylinder.

Most different materials can be used for the cylinder. Thus, different metals are suitable in particular such ones by means of which a form-closed connection with the formed solid solutions or intermetallic phases is achievable.

However, in certain cases ceramics can also be appropriate as cylinder material. Aluminium oxide would be an example for this.

However, such a formation with a cylinder forming an outer circumferential surface of the molded body according to the invention is also serviceable with an embodiment to be described in the following.

However, shaping can also be achieved such that a plate-like starting product as an open-porous body is wrapped around a continuous longitudinal axis a number of times in helical form. Thus, it results the possibility to fabricate a solid cylinder molded body according to the invention with a body being free of cavities except from the pores.

With such an embodiment it is further possible to place a flexible film between the individual helically wrapped layers of the open-porous structure which in this type of shaping is wrapped in with, and the individual layers are allowed to be separated from each other with such a film.

Such a film can be formed from a metal or a ceramic as well. In the case of ceramic sheets these should have a green strength allowing such a deformation.

Also, the film helically disposed between the individual layers can be perforated and is allowed to have apertures, accordingly. On that occasion, the permeability of the film for the different fluids should be less than being the case with the open-porous structure.

The open-porous bodies to be used for the final fabrication of the open-porous molded bodies according to the invention should not exceed a maximum thickness of 100 mm, preferably 60 mm in a reference plane in order to achieve that at least almost a uniform surface coating having an organic binder and metallic powder can be obtained over the total volume.

On that occasion, it is not obligatory for a starting body as an open-porous structure to have a constant thickness in the respective reference plane. Accordingly, open-porous bodies being wedge-shaped or having a continuously increasing thickness in the axial direction can also be used.

In particular, in the case already mentioned in that a molded body according to the invention has been formed from a plurality of hollow cylinders, an open-porous molded body can be fabricated in an advantageous manner, which starting from a central, inside longitudinal axis comprises different pore structures radially outwardly with different porosities and /or pore sizes. This is allowed to vary depending on hollow cylinder to hollow cylinder, for example.

However, it is also possible to achieve an almost continuous graduation wherein in this case a selective choice of the thickness of the open-porous body made of nickel or iron, and the deposited quantity of metallic powder and / or organic binder upon the surface of the open-porous structure are suitable parameters for such a formation of a molded body according to the invention. The open-porous molded bodies fabricated according to the invention achieve a minimum porosity of 85%, however, wherein porosities of above 90% or 95% can be obtained as well.

The pore size and the number of pores can be substantially predetermined by the selection of the open-porous body used for the fabrication. On that occasion, with the procedure according to the invention, thus with the formation of solid solutions or intermetallic phases, the respective pore sizes and porosities are influenced to a low extent.

In the following, the invention shall be explained in more detail by way of example.

For the fabrication according to the invention of an open-porous molded body an open-porous body made of nickel has been used with a porosity of about 94%. This body has measured the dimension of 300 mm * 150 mm and a thickness of 1.5 mm.

Poly(vinylpyrrolidone) has been used as a binder. On that occasion, a 1% aqueous solution has been prepared, and the open-porous body made of nickel has been dipped into 50 ml of this low viscous solution containing the organic binder, and has been pressed subsequently upon an absorbent pad such that the binder could be removed out of the pores of the open-porous body made of nickel, and merely the ridges thereof remained wet with the binder.

Aluminium powder having a mass of 2 g with a flaky particle form and 8 g of spherical aluminium powder has been used as metallic powder, and has been dry mixed over a period of time of 10 min in an agitator.

This aluminium powder has been deposited upon the open-porous body made of nickel coated with the binder from at least two sides, wherein the application has been achieved in a vibration device to which the open-porous body made of nickel has been fixed. Thus, an almost uniform surface coating could be obtained also within the pores of the open-porous body made of nickel.

The open-porous body made of nickel thus prepared with the binder and aluminium powder coating has been rolled up into a cylindrical body in a helical form wherein the adhesion of the binder also ensures the adhesion of the aluminium powder particles on the nickel surface.

Subsequent to this shaping, the first thermal treating stage already mentioned has been achieved in an oven within a nitrogen atmosphere. With this first thermal treatment stage a minimum temperature of 250 °C should be maintained over a period of time of at least 15 min to be able to remove the organic components.

With the embodiment, the first thermal treatment stage has been achieved with a heating up rate of 5 K / min to a temperature of 300 °C which has been successively increased to 600 °C. A holding time of approximately 30 min has been considered within this temperature range.

Subsequently, the second thermal treatment stage has been performed in which a minimum temperature of 600 °C, preferably of at least 650 °C, over a period of time of at least 15 min should be maintained.

With the actual embodiment, this thermal treatment stage has been carried out within a temperature range between 900 °C to 1000 °C over a period of time of 30 min.

Thus, it will be appreciated that the formation of the nickel aluminide can be achieved already at temperatures which are significantly below the melting temperature of nickel.

Subsequent to the second thermal treatment stage of sintering, the molded body thus fabricated with a length of 300 mm has completely consisted of nickel aluminide. Its porosity has reached 91%. A thus fabricated molded body disposed in the air is oxidation-resistant at temperatures up to 1050 °C. In addition to this thermal stability it also achieves a sufficient mechanical strength which allows to employ it for a mobile use as a particle filter.

In an analogous form, an open-porous body made of iron can also be used by means of which iron aluminide is formed with aluminium. Herein, the temperatures during the second thermal treatment stage should merely be adapted.

## Claims

1. A method for fabricating an open-porous molded body which is formed from a solid solution or an intermetallic phase of nickel or iron and at least another metal or
on the surface of the molded body formed from nickel or iron a solid solution or an intermetallic phase is formed,
wherein an open-porous body made of nickel or iron is coated with a metallic powder forming a solid solution or an intermetallic phase by means of an organic binder,
subsequently said open-porous body made of nickel or iron is brought into the desired shape with observing minimum bending radii in order to avoid breaking of the open-porous body,
then, the organic components are removed in a first thermal treatment step, and
with a second thermal treatment subsequent to said first thermal treatment said open-porous molded body is sintered and said solid solution or said intermetallic phase is formed.

2. A method according to claim 1, **characterized in that** said organic binder and subsequently said respective metallic powder is deposited upon said surface of said open-porous body made of nickel or iron, and shaping is first performed then.

3. A method according to claim 1 or claim 2, **characterized in that** pure aluminium powder, aluminium powder containing additional metallic elements or being prealloyed is deposited.

4. A method according to any one of the preceding claims, **characterized in that** said body made of nickel or iron coated with said binder or said metallic powder is deformed into a hollow cylinder.

5. A method according to claim 4, **characterized in that** at least two of such said hollow cylinders are joined to each other with respectively adapted outer and inner diameters.

6. A method according to any one of the preceding claims, **characterized in that** said body made of nickel or iron coated with said binder is deformed in a plurality of layers helically around a longitudinal axis in a wrapped shape.

7. A method according to any one of claims 1 to 6, **characterized in that** said/said deformed coated body/bodies made of nickel or iron are enclosed by a cylinder forming an outer circumferential surface.

8. A method according to claim 7 or claim 8, **characterized in that** said outer circumferential surface of said cylinder is perforated.

9. A method according to claim 7 or 8, **characterized in that** a cylinder made of a metal or ceramic is used.

10. A method according to claim 6 **characterized in that** a film also being helically wrapped is wrapped in between helically wrapped layers.

11. A method according to claim 10, **characterized in that** a perforated film is used.

12. A method according to claim 10 or claim 11, **characterized in that** a film made of a metal or a ceramic is used.

13. A method according to any one of the preceding claims, **characterized in that** said organic binder having low viscosity is deposited upon the surface of said open-porous body by dipping and/or spraying such that the open pore structure is maintained, and merely the ridges of said pores are coated.

14. A method according to claim 13, **characterized in that** excessive binder is removed by pressing together, blowing through and/or exhausting from said body made of nickel or iron.

15. A method according to any one of the preceding claims, **characterized in that** during and/or after the application of said metallic powder said body made of nickel or iron is set into vibration.

16. A method according to any one of the preceding claims, **characterized in that** an open-porous body made of nickel or iron is used which has a maximum thickness of 100 mm in a reference plane prior to coating and shaping.

17. A method according to any one of the preceding claims, **characterized in that** during the first thermal treatment aluminium temperature of 250 °C is achieved, and this is maintained over a period of time of at least 15 min.

18. A method according to any one of the preceding claims, **characterized in that** during the second thermal treatment a minimum temperature of 600 °C is maintained over a period of time at least 15 min.

19. A method according to any one of the preceding claims, **characterized in that** in addition at least one further metal in powdery form is added to said respective metallic powder.

20. An open-porous molded body fabricated with a method according to any one of the claims 1 to 19, **characterized in that** it is formed from a solid solution or an intermetallic phase of nickel or iron and a metal
or said surface is formed such a layer from a solid solution or an intermetallic phase, and said molded body comprises at least curved areas with observing minimum bending radii in order to be observed to avoid breaking of the body.

21. A molded body according to claim 15, **characterized in that** it has been formed from at least one generally plate-like, open-porous body made of nickel or iron obtained by subsequently shaping.

22. A molded body according to claim 20 or 21, **characterized in that** it is formed in shape of a hollow cylinder.

23. A molded body according to claim 22, **characterized in that** at least two hollow cylinders telescoped into one another are forming said molded body.

24. A molded body according to claim 20 or claim 21, **characterized in that** it has a helical shape formed around a longitudinal axis.

25. A molded body according to any one of claims 20 to 24, **characterized in that** said porosity varies starting from said inside longitudinal axis radially outwardly step by step or in a graded form.

26. A molded body according to any one of claim 20 to 25, **characterized in that** it is formed from nickel aluminide or iron aluminide, or is coated with it on its surfaces.

27. A molded body according to any one of claims 20 to 26, **characterized in that** a minimum porosity of 85 % is achieved.

28. A molded body according to any one of claims 20 to 27, **characterized in that** at least one cylinder forming an outer circumferential surface encloses said open-porous molded body.

29. A molded body according to claim 28, **characterized in that** said cylinder is perforated.

30. A molded body according to claim 28 or claim 29, **characterized in that** said cylinder is formed from a metal or a ceramic.

31. A molded body according to any one of claims 20 to 30, **characterized in that** a separating film is arranged between layers of a helically wrapped, open-porous molded body.

32. A molded body according to any one of the claims 20 to 31, **characterized in that** said film is formed from a metal or a ceramic.

33. A molded body, according any one of the claims 20 to 32, **characterized in that** said film is perforated.

34. The use of a molded body according to any one of claims 20 to 33 as a particle filter.

## Patentansprüche

1. Verfahren zur Herstellung eines offenporigen Formkörpers, der aus Mischkristallen oder intermetallischen Phasen mit Nickel oder Eisen und mindestens einem weiteren Metall gebildet ist, oder auf dessen Oberfläche solche Mischkristalle oder intermetallische Phasen ausgebildet sind,
bei dem ein offenporiger aus Nickel oder Eisen bestehender Körper mittels eines organischen Binders mit einem Mischkristalle oder intermetallische Phasen bildenden Metallpulver beschichtet,
anschließend der offenporige Körper aus Nickel oder Eisen unter Einhaltung von Mindestbiegeradien, um einen Bruch des offenporigen Körpers zu vermeiden, in die gewünschte Form gebracht,
nachfolgend in einem ersten Wärmebehandlungsschritt die organischen Bestandteile entfernt und
mit einer zweiten Wärmebehandlung bei gegenüber der ersten Wärmebehandlung der offenporige Formkörper gesintert und das Mischkristall oder die intermetallische Phase ausgebildet werden.

2. Verfahren nach Anspruch 1, **dadurch gekennzeichnet, dass** auf die Oberfläche des offenporigen Körpers aus Nickel oder Eisen der organische Binder und nachfolgend das jeweilige Metallpulver aufgebracht und erst dann die Formgebung durchgeführt wird.

3. Verfahren nach Anspruch 1 oder 2, **dadurch gekennzeichnet, dass** reines Aluminiumpulver, zusätzliche metallische Elemente enthaltendes oder vorlegiertes Aluminiumpulver aufgebracht wird.

4. Verfahren nach einem der vorhergehenden Ansprüche, **dadurch gekennzeichnet, dass** der mit Binder und Metallpulver beschichtete Körper aus Nickel oder Eisen zu einem Hohlzylinder verformt wird.

5. Verfahren nach Anspruch 4, **dadurch gekennzeichnet, dass** mindestens zwei solcher Hohlzylinder mit jeweils angepassten Außen- und Innendurchmessern zusammengefügt werden.

6. Verfahren nach einem der vorhergehenden Ansprüche, **dadurch gekennzeichnet, dass** der mit Binder und Metall beschichtete Körper aus Nickel oder Eisen in mehreren Lagen spiralförmig um eine Längsachse in gewickelter Form verformt wird.

7. Verfahren nach einem der Ansprüche 1 bis 6,
**dadurch gekennzeichnet, dass** der/die verformte(n) beschichtete(n) Körper aus Nickel oder Eisen von einem eine äußere Mantelfläche bildenden Zylinder umschlossen wird/werden.

8. Verfahren nach Anspruch 7,
**dadurch gekennzeichnet, dass** die äußere Mantelfläche des Zylinders perforiert wird.

9. Verfahren nach Anspruch 7 oder 8,
**dadurch gekennzeichnet, dass** ein Zylinder aus einem Metall oder einer Keramik verwendet wird.

10. Verfahren nach Anspruch 6,
**dadurch gekennzeichnet, dass** zwischen spiralförmig gewickelten Lagen eine ebenfalls spiralförmig gewickelte Folie eingewickelt wird.

11. Verfahren nach Anspruch 10,
**dadurch gekennzeichnet, dass** eine perforierte Folie verwendet wird.

12. Verfahren ach Anspruch 10 oder 11,
**dadurch gekennzeichnet, dass** eine Folie aus einem Metall oder einer Keramik verwendet wird.

13. Verfahren nach einem der vorhergehenden Ansprüche, **dadurch gekennzeichnet, dass** der organische Binder mit einer geringen Viskosität durch Tauchen und/oder Besprühen so auf die Oberfläche des offenporigen Körpers aufgebracht wird, dass die offene Porenstruktur beibehalten und lediglich die Stege der Poren beschichtet werden.

14. Verfahren nach Anspruch 13, **dadurch gekennzeichnet, dass** überschüssiger Binder durch Zusammenpressen, Durchblasen und/oder Absaugen aus dem Körper aus Nickel oder Eisen entfernt wird.

15. Verfahren nach einem der vorhergehenden Ansprüche, **dadurch gekennzeichnet, dass** bei und/oder nach dem Auftrag des Metallpulvers der Körper aus Nickel oder Eisen in Schwingung versetzt wird.

16. Verfahren nach einem der vorhergehenden Ansprüche, **dadurch gekennzeichnet, dass** ein offenporiger Körper aus Nickel oder Eisen eingesetzt wird, der in einer Bezugsebene vor der Beschichtung und Formgebung eine maximale Dicke von 100 mm aufweist.

17. Verfahren nach einem der vorhergehenden Ansprüche, **dadurch gekennzeichnet, dass** beim ersten Wärmebehandlungsschritt eine Mindesttemperatur von 250 °C erreicht und diese über einen Zeitraum von mindestens 15 min eingehalten wird.

18. Verfahren nach einem der vorhergehenden Ansprüche, **dadurch gekennzeichnet, dass** bei der zweiten Wärmebehandlung eine Mindesttemperatur von 600 °C über einen Zeitraum von mindestens 15 min gehalten wird.

19. Verfahren nach einem der vorhergehenden Ansprüche, **dadurch gekennzeichnet, dass** dem jeweiligen Metallpulver zusätzlich mindestens ein weiteres Metall in Pulverform zugegeben wird.

20. Offenporiger Formkörper hergestellt mit einem Verfahren nach einem der Ansprüche 1 bis 19, **dadurch gekennzeichnet, dass** er aus Mischkristallen oder intermetallischen Phasen von Nickel oder Eisen und einem Metall gebildet oder
die Oberfläche aus diesen Mischkristallen bzw. der intermetallischen Phase als solche Schicht gebildet und
der Formkörper unter Einhaltung von Mindestbiegeradien, um einen Bruch des Körpers zu vermeiden, zumindest gekrümmte Bereiche aufweist.

21. Formkörper nach Anspruch 15, **dadurch gekennzeichnet, dass** er aus mindestens einem durch nachfolgende Formgebung erhaltenen im Wesentlichen plattenförmigen offenporigen Körper aus Nickel oder Eisen gebildet worden ist.

22. Formkörper nach Anspruch 20 oder 21,
**dadurch gekennzeichnet, dass** er in Form eines Hohlzylinders ausgebildet ist.

23. Formkörper nach Anspruch 22,
**dadurch gekennzeichnet, dass** mindestens zwei ineinander gesteckte Hohlzylinder den Formkörper bilden.

24. Formkörper nach Anspruch 20 oder 21,
**dadurch gekennzeichnet, dass** er eine um eine Längsachse ausgebildete Spiralform aufweist.

25. Formkörper nach einem der Ansprüche 20 bis 24,
**dadurch gekennzeichnet, dass** sich die Porosität ausgehend von der innen liegenden Längsachse radial nach außen stufenweise oder in gradierter Form verändert.

26. Formkörper nach einem der Ansprüche 20 bis 25,
**dadurch gekennzeichnet, dass** er aus Nickelaluminid oder Eisenaluminid gebildet oder damit an seinen Oberflächen beschichtet ist.

27. Formkörper nach einem der Ansprüche 20 bis 26,
**dadurch gekennzeichnet, dass** eine Mindestporosität von 85 % erreicht ist.

28. Formkörper nach einem der Ansprüche 20 bis 27,
**dadurch gekennzeichnet, dass** ein zumindest eine äußere Mantelfläche bildender Zylinder, den offenporigen Formkörper einfasst.

29. Formkörper nach Anspruch 28,
**dadurch gekennzeichnet, dass** der Zylinder perforiert ist.

30. Formkörper nach Anspruch 28 oder 29,
**dadurch gekennzeichnet, dass** der Zylinder aus einem Metall oder einer Keramik gebildet ist.

31. Formkörper nach einem der Ansprüche 20 bis 30,
**dadurch gekennzeichnet, dass** zwischen Lagen eines spiralförmig gewickelten offenporigen Formkörpers eine trennende Folie angeordnet ist.

32. Formkörper nach einem der Ansprüche 20 bis 31,
**dadurch gekennzeichnet, dass** die Folie aus einem Metall oder einer Keramik gebildet ist.

33. Formkörper nach einem der Ansprüche 20 bis 32,
**dadurch gekennzeichnet, dass** die Folie perforiert ist.

34. Verwendung eines Formkörpers nach einem der Ansprüche 20 bis 33, als Partikelfilter.

## Revendications

1. Procédé de fabrication d'un corps moulé à pores ouverts qui est formé à partir d'une solution solide ou d'une phase intermétallique de nickel ou fer et d'au moins un autre métal ou
sur la surface du corps moulé formé à partir de nickel ou fer, une solution solide ou une phase intermétallique est formée,
dans lequel un corps à pores ouverts fait de nickel ou de fer est recouvert d'une poudre métallique formant une solution solide ou une phase intermétallique au moyen d'un liant organique,
subséquemment ledit corps à pores ouverts fait de nickel ou de fer est amené dans la forme voulue en observant des rayons de courbure minimum afin d'éviter la rupture du corps à pores ouverts,
ensuite, les composés organiques sont retirés dans une première étape de traitement thermique, et
avec un second traitement thermique suivant ledit premier traitement thermique, ledit corps moulé à pores ouverts est fritté et ladite solution solide ou ladite phase intermétallique est formée.

2. Procédé selon la revendication 1, **caractérisé en ce que** ledit liant organique et subséquemment ladite poudre métallique respective est déposé sur ladite surface dudit corps à pores ouverts fait de nickel ou de fer, et le façonnage est réalisé ensuite pour la première fois.

3. Procédé selon la revendication 1 ou 2, **caractérisé en ce que** de la poudre d'aluminium pure, de la poudre d'aluminium contenant des éléments métalliques supplémentaires ou préalliée est déposée.

4. Procédé selon l'une quelconque des revendications précédentes, **caractérisé en ce que** ledit corps fait de nickel ou de fer recouvert dudit liant ou de ladite poudre métallique est déformé sous forme d'un cylindre creux.

5. Procédé selon la revendication 4, **caractérisé en ce que** au moins deux desdits cylindres creux sont joints l'un à l'autre avec des diamètres extérieur et intérieur respectivement adaptés.

6. Procédé selon l'une quelconque des revendications précédentes, **caractérisé en ce que** ledit corps fait de nickel ou de fer recouvert dudit liant est déformé en une pluralité de couches disposées de façon hélicoïdale autour d'un axe longitudinal dans une forme enroulée.

7. Procédé selon l'une quelconque des revendications 1 à 6, **caractérisé en ce que** ledit ou lesdits corps recouverts déformés faits de nickel ou de fer sont entourés d'un cylindre formant une surface circonférentielle extérieure.

8. Procédé selon la revendication 7 ou 8, **caractérisé en ce que** ladite surface circonférentielle extérieure dudit cylindre est perforée.

9. Procédé selon la revendication 7 ou 8, **caractérisé en ce qu'**un cylindre fait d'un métal ou d'une céramique est utilisé.

10. Procédé selon la revendication 6, **caractérisé en ce qu'**un film également enroulé de façon hélicoïdale est enroulé entre des couches enroulées de façon hélicoïdale.

11. Procédé selon la revendication 10, **caractérisé en ce qu'**un film perforé est utilisé.

12. Procédé selon la revendication 10 ou 11, **caractérisé en ce qu'**un film fait d'un métal ou d'une céramique est utilisé.

13. Procédé selon l'une quelconque des revendications précédentes, **caractérisé en ce que** ledit liant organique ayant une faible viscosité est déposé sur la surface dudit corps à pores ouverts par trempage et/ou pulvérisation afin que la structure à pores ouverts soit maintenue, et simplement les bords desdits pores sont recouverts.

14. Procédé selon la revendication 13, **caractérisé en ce que** le liant en excès est retiré en le pressant, en soufflant à travers et/ou en l'évacuant dudit corps fait de nickel ou de fer.

15. Procédé selon l'une quelconque des revendications précédentes, **caractérisé en ce que** pendant et/ou après l'application de ladite poudre métallique ledit corps fait de nickel ou de fer est mis en vibration.

16. Procédé selon l'une quelconque des revendications précédentes, **caractérisé en ce qu'**un corps à pores ouverts fait de nickel ou de fer est utilisé, qui a une épaisseur maximale de 100 mm dans un plan de référence avant le revêtement et le façonnage.

17. Procédé selon l'une quelconque des revendications précédentes, **caractérisé en ce que** pendant le premier traitement thermique, une température d'aluminium de 250°C est atteinte, et est maintenue sur une période de temps d'au moins 15 minutes.

18. Procédé selon l'une quelconque des revendications précédentes, **caractérisé en ce que** pendant le second traitement thermique, une température minimale de 600°C est maintenue sur une période de temps d'au moins 15 minutes.

19. Procédé selon l'une quelconque des revendications précédentes, **caractérisé en ce que**, en plus, au moins un autre métal sous forme poudreuse est ajouté à ladite poudre métallique respective.

20. Corps moulé à pores ouverts fabriqué avec un procédé selon l'une quelconque des revendications 1 à 19, **caractérisé en ce qu'**il est formé à partir d'une solution solide ou d'une phase intermétallique de nickel ou fer et d'un métal
ou ladite surface est formée comme une couche à partir d'une solution solide ou d'une phase intermétallique, et ledit corps à pores ouverts comprend au moins des zones courbes en observant des rayons de courbure minimum à observer pour éviter la rupture du corps.

21. Corps moulé selon la revendication 15, **caractérisé en ce qu'**il a été formé à partir d'au moins un corps à pores ouverts généralement en forme de plaque fait de nickel ou de fer obtenu par façonnage subséquent.

22. Corps moulé selon la revendication 20 ou 21, **caractérisé en ce qu'**il a la forme d'un cylindre creux.

23. Corps moulé selon la revendication 22, **caractérisé en ce que** au moins deux cylindres creux télescopés l'un dans l'autre forment ledit corps moulé.

24. Corps moulé selon la revendication 20 ou 21, **caractérisé en ce qu'**il a une forme hélicoïdale formée autour d'un axe longitudinal.

25. Corps moulé selon l'une quelconque des revendications 20 à 24, **caractérisé en ce que** ladite porosité varie en commençant à partir dudit axe longitudinal intérieur radialement vers l'extérieur étape par étape ou sous une forme graduée.

26. Corps moulé selon l'une quelconque des revendications 20 à 25, **caractérisé en ce qu'**il est formé d'aluminure de nickel ou d'aluminure de fer ou en est recouvert sur ses surfaces.

27. Corps moulé selon l'une quelconque des revendications 20 à 26, **caractérisé en ce qu'**une porosité minimale de 85% est atteinte.

28. Corps moulé selon l'une quelconque des revendications 20 à 27, **caractérisé en ce qu'**au moins un cylindre formant une surface circonférentielle extérieure entoure ledit corps moulé à pores ouverts.

29. Corps moulé selon la revendication 28, **caractérisé en ce que** ledit cylindre est perforé.

30. Corps moulé selon la revendication 28 ou 29, **caractérisé en ce que** ledit cylindre est formé à partir d'un métal ou d'une céramique.

31. Corps moulé selon l'une quelconque des revendications 20 à 30, **caractérisé en ce qu'**un film de séparation est agencé entre les couches d'un corps moulé à pores ouverts enroulées de façon hélicoïdale.

32. Corps moulé selon l'une quelconque des revendications 20 à 31, **caractérisé en ce que** ledit film est formé à partir d'un métal ou d'une céramique.

33. Corps moulé, selon l'une quelconque des revendications 20 à 32, **caractérisé en ce que** ledit film est perforé.

34. Utilisation d'un corps moulé selon l'une quelconque des revendications 20 à 33 comme filtre à particules.
